**Europäisches Patentamt**

**European Patent Office**

**Office européen des brevets**

(11) Veröffentlichungsnummer: **0 200 930**
A1

# EUROPÄISCHE PATENTANMELDUNG

(21) Anmeldenummer: 86104644.9

(22) Anmeldetag: 04.04.86

(51) Int. Cl.⁴: **F 02 B 27/00**, F 02 B 27/02

(30) Priorität: 09.05.85 DE 3516674

(43) Veröffentlichungstag der Anmeldung: **12.11.86**
**Patentblatt 86/46**

(84) Benannte Vertragsstaaten: **DE FR GB IT SE**

(71) Anmelder: **Dr.Ing.h.c. F. Porsche Aktiengesellschaft,
Porschestrasse 42, D-7000 Stuttgart 40 (DE)**

(72) Erfinder: **Schmid, Wolfgang, Schussenweg 8,
D-7994 Langenargen (DE)**

(54) **Luftansauganlage einer Hubkolben-Brennkraftmaschine.**

(57) Eine Luftansauganlage, die zwischen den beiden Zylinderreihen (1, 2) einer Hubkolben-Brennkraftmaschine angeordnet ist, besitzt einen Luftsammelbehälter (3) der durch eine Trennwand (4) in zwei gleich große Lufträume (5, 6) unterteilt ist, die durch zwei Saugrohre (9, 10) an den Luftfilter (15) angeschlossen sind. Die Einzelsaugrohre (5a–6d) sind entsprechend der Zündfolge der ihnen zugeordneten Zylinder mit einem der beiden Lufträume verbunden. Eine die Lufträume verbindende Öffnung in der Trennwand ist durch eine Drehklappe (8) steuerbar, die im oberen Drehzahlbereich der Brennkraftmaschine in Offenstellung steht.

EP 0 200 930 A1

Luftansauganlage einer Hubkolben-
Brennkraftmaschine


Die Erfindung betrifft eine Luftansauganlage nach dem Oberbegriff des Anspruchs 1.

Bei einer aus DE-OS 34 08 499 bekannten Luftansauganlage
sind die beiden Zylinderreihen einer Brennkraftmaschine an
ein zwischen ihnen liegendes I-förmiges Verteilerstück aus
zwei Resonanzbehältern und einem Verbindungsrohr angeschlossen.
Wenn das Verteilerstück hinsichtlich Volumen sowie Querschnitt
und Länge des Verbindungsrohres auf Resonanz abgestimmt ist,
läßt sich durch Schwingaufladung ein hoher Füllungsgrad der
Zylinder und somit eine Erhöhung des Drehmoments und der
Leistung der Brennkraftmaschine erreichen. Nachteilig ist aber,
daß diese Luftansauganlage bedingt durch das verhältnismäßig
lange Verbindungsrohr einen großen Bauraum erfordert. Wenn
sie oberhalb der Brennkraftmaschine angeordnet ist, deckt
sie diese fast vollständig ab und muß bei Montagearbeiten an
der Brennkraftmaschine abgebaut werden.

Die Aufgabe der Erfindung besteht darin, eine Luftansauganlage
so weiter zu entwickeln, daß sie eine Drehmomenterhöhung erbringt, ohne einen größeren Bauraum erforderlich zu machen.

Eine Lösung dieser Aufgabe gelingt mit den kennzeichnenden
Merkmalen des Anspruchs 1. Bei dieser Konzeption ist nur ein
Luftsammelbehälter vorgesehen, der durch eine Trennwand in
zwei Lufträume unterteilt ist, an die die Einzelsaugrohre zu
den Zylindern angeschlossen sind. Da ein Verbindungsrohr entbehrlich ist, baut die Luftansauganlage wesentlich kleiner.
Durch eine geeignete Abstimmung des Volumens der Lufträume
und der Länge der Einzelsaugrohre läßt sich eine beträchtliche Drehmomenterhöhung erreichen, insbesondere im unteren Drehzahlbereich der Brennkraftmaschine. Zur besseren Entkopplung
der beiden Lufträume ist es vorteilhaft, wenn jeder Luftraum
durch ein mit einer Drosselklappe steuerbares, verhältnismäßig langes Saugrohr an den gemeinsamen Luftfilter angeschlossen ist.

Um ein Absinken des Drehmoments bei höheren Drehzahlen infolge
Resonanzverstimmung zu vermeiden, ist in der Trennwand eine
durch eine Drehklappe steuerbare Öffnung vorhanden, die bei
Drehzahlen oberhalb von ca. 4000 1/min freigegeben wird. Die
Einzelsaugrohre saugen nun aus dem Gesamtvolumen des Luftsammelbehälters an und das Drehmoment bleibt bis zu einer
Drehzahl von ca. 5000 1/min. auf konstanter Höhe.

In bevorzugter konstruktiver Ausführung sind die Einzelsaugrohre schwach gebogen, miteinander verschweißt oder vergossen
und bilden die Deckfläche des Luftsammelbehälters. Da sie
somit in die Struktur des Luftsammelbehälters integriert sind,
benötigt diese Anlage einen minimalen Einbauraum und ist
mit geringen Fertigungskosten herstellbar.

Die erfindungsgemäße Luftansauganlage ist in der Zeichnung
dargestellt und wird nachfolgend näher erläutert.
Es zeigt
Fig. 1     eine schematische Anordnung der Luftansauganlage,
Fig. 2     Drehmoment-Drehzahl-Diagramm,
Fig. 3     Querschnitt einer Luftansauganlage für eine
           V8-Brennkraftmaschine,
Fig. 4     Schnitt nach Linie IV-IV der Fig. 3.

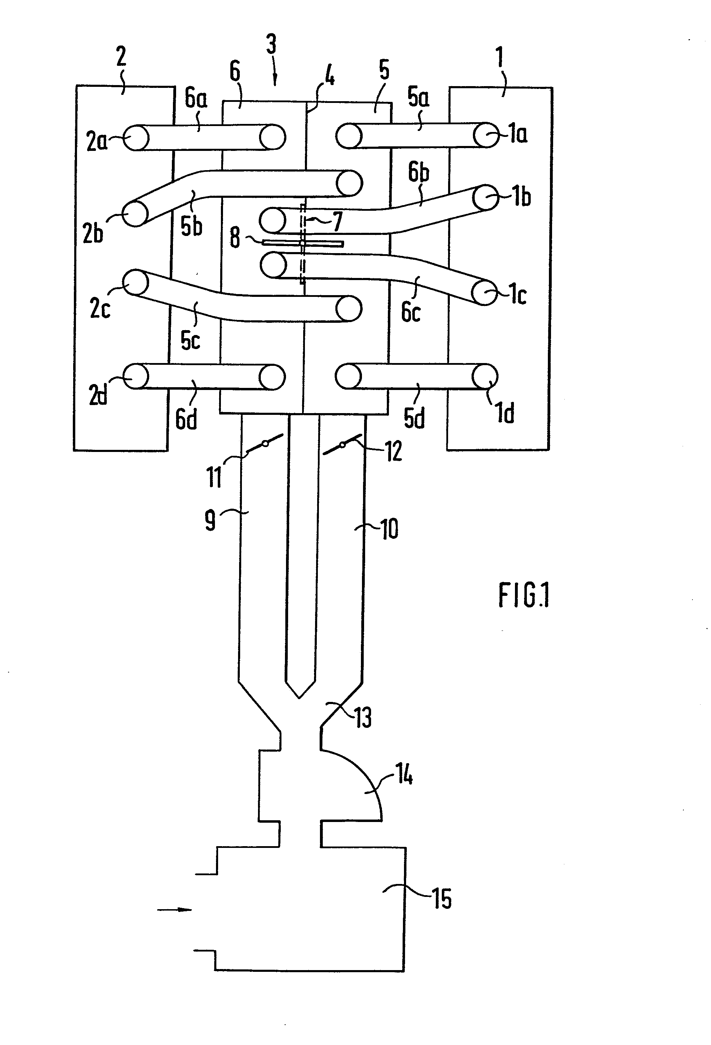

Die Luftansauganlage nach Fig. 1 dient für eine 8-Zylinder-
Brennkraftmaschine mit zwei Reihen 1 und 2 von je 4 Ventilen
1a, 1b, 1c, 1d bzw. 2a, 2b, 2c, 2d. Zwischen den Zylinderreihen 1 und 2 ist ein gemeinsamer Luftsammelbehälter 3 angeordnet, der durch eine Trennwand 4 in zwei gleich große
Lufträume 5 und 6 unterteilt ist. Von dem Luftraum 5 führen
zwei Einzelsaugrohre 5a und 5d zu den Zylindern 1a und 1d,
zwei Einzelsaugrohre 5b und 5c zu den Zylindern 2b und 2c der
anderen Zylinderreihe 2. Der Luftraum 6 ist durch Einzelsaugrohre 6a und 6d mit den Zylindern 2a und 2d, durch Einzelsaugrohre 6b und 6c mit den Zylindern 1b und 1c verbunden.
Die Einzelsaugrohre haben alle eine gestreckte Länge von etwa
300 mm. In einer Öffnung 7 der Trennwand 4 ist eine Drehklappe 8 angeordnet, die in Öffungsstellung voll und gestrichelt in Schließstellung gezeichnet ist. Auch in Schließstellung weist sie zu der Trennwand 4 einen Luftspalt auf, um
einen geringen Austausch zwischen den Lufträumen 5 und 6 zu
ermöglichen. Von den Lufträumen 5 und 6 führen Saugrohre 9
und 10 mit eingebauten Drosselklappen 11 und 12 über eine
Rohrverzweigung 13 zu einem Luftmengenmesser 14 und einem
Luftfilter 15. Anstelle der beiden Drosselklappen 11 und 12
kann auch eine gemeinsame Drosselklappe zwischen dem Luftmengenmesser 14 und der Rohrverzweigung 13 eingesetzt werden.
Um die beiden Lufträume 5 und 6 bei geschlossener Drehklappe 8
schwingungsmäßig voneinander zu entkoppeln, sind die Saugrohr 9 und 10 recht lang ausgeführt. Ihre Länge bis zu der
Rohrverzweigung 13 ist etwa doppelt so groß wie die gestreckte
Länge der Einzelsaugrohre.

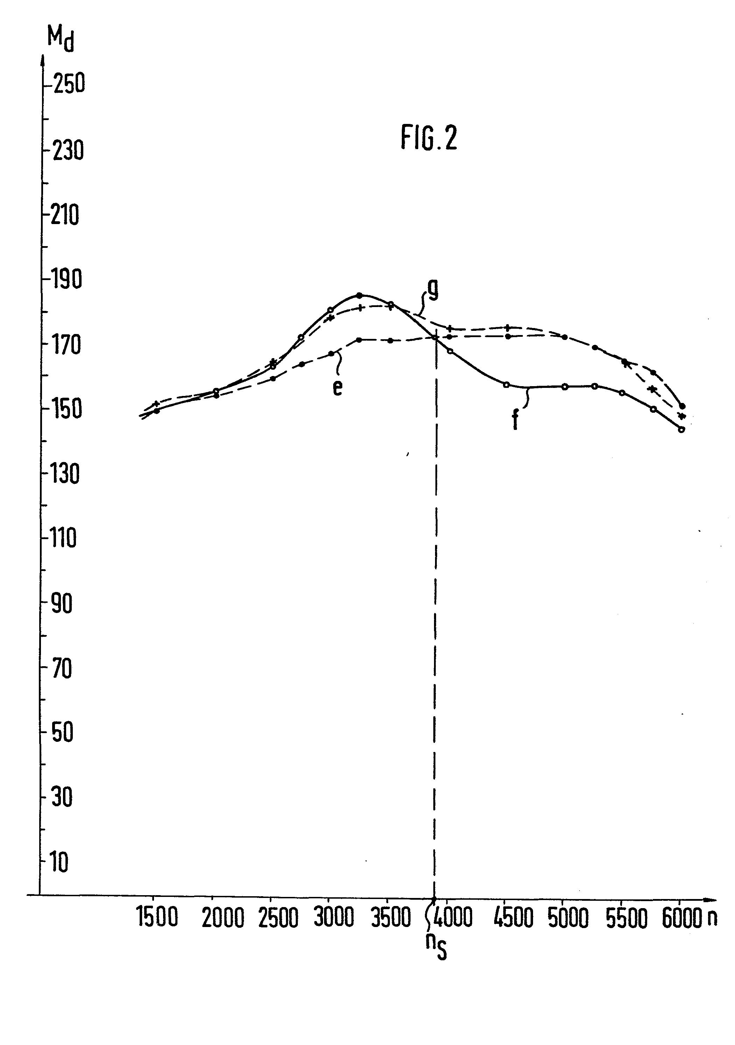

Der mit einer solchen Luftansauganlage erzielte Drehmomentverlauf $M_d$ einer Brennkraftmaschine in Abhängigkeit ihrer Drehzahl n ist in Fig. 2 dargestellt. Die Kurve e ergibt sich,
wenn die Drehklappe 8 über den ganzen Drehzahlbereich offen
ist bzw. keine Trennwand vorhanden ist, die Zylinder also aus
beiden Lufträumen ansaugen. Schließt man die Drehklappe im
ganzen Drehzahlbereich, so daß die Zylinder nur aus einem
Luftraum, entweder aus 5 oder aus 6 ansaugen, so stellt sich ein Drehmomentverlauf nach Kurve f mit einer Drehmomentüberhöhung bis zu 10 % ein. Paßt man die Drehklappe in die Öffnung
der Trennwand so ein, daß ein Luftspalt frei bleibt, so erhält man die Kurve g, die eine etwas geringere Drehmomentüberhöhung zeigt. Wenn man die Drehklappe bei einer Drehzahl $n_S$
etwa gleich 3800 1/min. in Öffnungsstellung geht, vermeidet
man den starken Drehmomentabfall nach Kurve f. Das Drehmoment
bleibt im Drehzalbereich von 4000 bis 5000 1/min konstant und
liegt etwas oberhalb des Drehmoments, wie es sich entsprechend Kurve e ergibt.

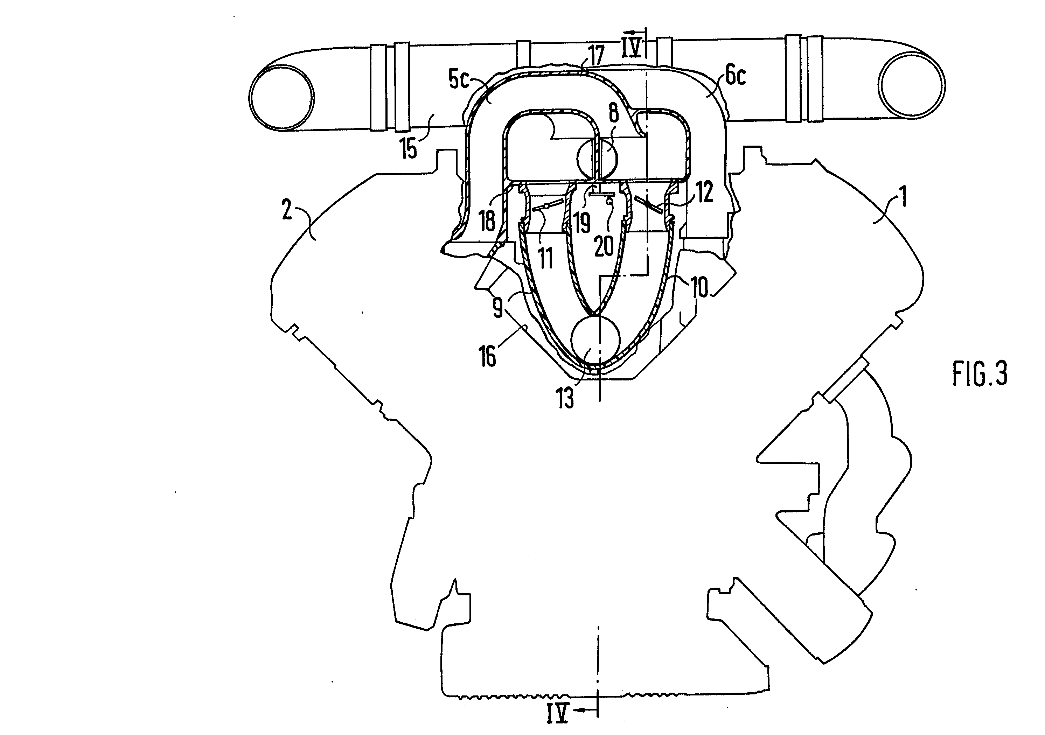

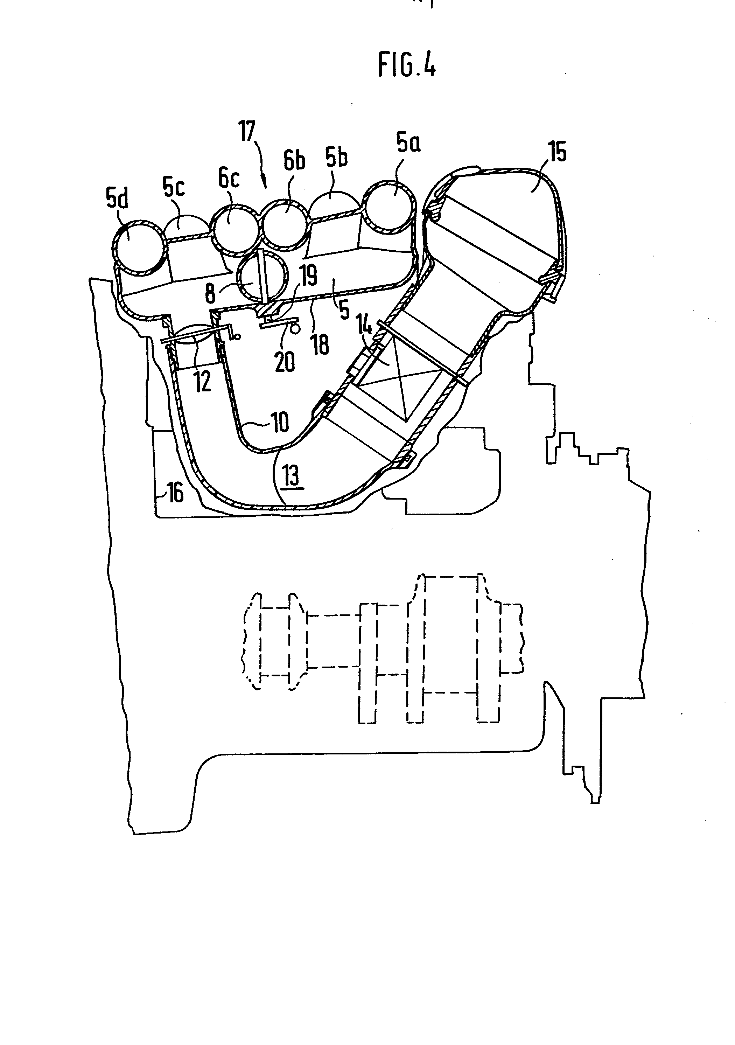

In den Fig. 3 und 4 ist eine Luftansauganlage gemäß der Erfindung im Querschnitt und Längsschnitt gezeigt, die zwischen
beiden Zylinderreihen einer V8-Brennkraftmaschine angebaut ist.
Die Luftführung vom Luftfilter 15 über den Luftmengenmesser 14
zu den Saugrohren 9, 10 und zum Luftsammelbehälter 3 ist gebogen ausgeführt und der Kontur des Gehäuses 16 der Brennkraftmaschine angepaßt. Der Luftsammelbehälter 3 erstreckt sich in
Längsrichtung der Brennkraftmaschine. Seine Deckfläche 17 ist
durch die miteinander vergossenen Einzelsaugrohre 5d, 5c, 6c,
6d, 5d, 5a gebildet. An seiner Unterseite 18 strömt die Luft
in die beiden Lufträume 5, 6 ein. Die Achse 19 der Drehklappe
8 ragt aus der Unterseite 18 des Luftsammelbehälters 3 heraus
und ist mit einem Betätigungshebel 20 versehen, mit dem die
Drehklappe ab einer Drehzahl $n_S$ etwa 3800 1/min. selbsttätig
geöffnet wird und im ganzen oberen Drehzahlbereich offen gehalten wird, um die erwünschte Drehmomentkurve g zu erhalten.

0200930

Z 24

Patentansprüche

1. Luftansauganlage einer Hubkolben-Brennkraftmaschine,
deren Zylinder in zwei Gruppen angeordnet sind, und über
Einzelsaugrohre an einen mittig zwischen den Zylindergruppen
zu ihnen längs verlaufenden Luftsammelbehälter angeschlossen
sind, dadurch gekennzeichnet, daß der Luftsammelbehälter (3)
durch eine Trennwand (4) in zwei annähernd gleich große Lufträume (5, 6) unterteilt ist, wobei die Einzelsaugrohre
(5a bis 5d und 6a bis 6d) entsprechend der Zündfolge ihrer
Zylinder mit einem der beiden Lufträume verbunden sind.

2. Luftansauganlage nach Anspruch 1, für eine 6-Zylinder-
Brennkraftmaschine in V- oder Boxer-Bauweise, dadurch gekennzeichnet, daß die Trennwand (4) in Richtung der beiden
Zylinderreihen (1, 2) verläuft und daß die Einzelsaugrohre der
rechten Zylinderreihe (1) an den linken Luftraum (6), die
Einzelsaugrohre der linken Zylinderreihe (2) an den rechten
Luftraum (5) angeschlossen sind.

3. Luftansauganlage nach Anspruch 1, für eine 8-Zylinder-
Brennkraftmaschine in V-Bauweise mit einer in Richtung der
Zylinderreihen verlaufenden Trennwand, dadurch gekennzeichnet,
daß beide Zylinderreihen (1, 2) über zwei Einzelsaugrohre
an den rechten Luftraum (5) und über zwei Einzelsaugrohre an
den linken Luftraum (6) angeschlossen sind.

4. Luftansauganlage nach Anspruch 1 bis 3, dadurch gekennzeichnet, daß die Trennwand (4) eine beide Lufträume (5, 6)
verbindende Öffnung (7) aufweist, die durch eine in ihr
angeordnete Drehklappe (8) steuerbar ist.

0200930

Z 24

5. Luftansauganlage nach Anspruch 4, dadurch gekennzeichnet, daß die Drehklappe (8) bei Drehzahlen der Brennkraftmaschine oberhalb von ca. 4000 1/min voll geöffnet ist.

6. Luftansauganlage nach Anspruch 1, dadurch gekennzeichnet, daß das Volumen jedes Luftraumes (5 bzw. 6) etwa gleich groß ist wie das Gesamthubvolumen einer Zylindergruppe (1 bzw. 2).

7. Luftansauganlage nach Anspruch 1, dadurch gekennzeichnet, daß die Einzelsaugrohre etwa gleiche gestreckte Länge haben und an der Oberseite des Luftsammelbehälters (3) so angegossen sind, daß sie dessen Deckfläche (17) bilden, wogegen an der Unterseite (18) des Luftsammelbehälters (3) an jedem Luftraum (5 bzw. 6) ein Saugrohr (10 bzw. 9) zu einem gemeinsamen Luftmengenmesser (14) und Luftfilter (15) angeschlossen ist.

8. Luftansauganlage nach Anspruch 7, dadurch gekennzeichnet, daß die Saugrohre (9, 10) etwa doppelt so lang sind wie die Einzelsaugrohre.

9. Luftansauganlage nach Anspruch 5, dadurch gekennzeichnet, daß die Achse (19) der Drehklappe (8) an der Trennwand (4) gelagert ist, und an dem aus dem Luftsammelbehälter (3) herausragenden Ende einen Betätigungshebel (20) trägt.

10. Luftansauganlage nach Anspruch 5 und 9, dadurch gekennzeichnet, daß die Drehklappe (8) mit seitlichem Spalt in die Öffnung (7) eingepaßt ist, so daß ein gedrosselter Luftaustausch zwischen den Lufträumen (5, 6) möglich ist.

FIG.1

FIG.2

FIG.3

4/4

0200930

FIG.4

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 117 043 (FORD) * Zusammenfassung; Seite 1, Zeilen 13-34,46-74,91-97,114-117 * | 1,4,5 | F 02 B 27/00 F 02 B 27/02 |
| Y | | 3,6 | |
| A | | 10 | |
| P,X | --- EP-A-0 155 685 (MAZDA) * Zusammenfassung; Seite 4, Zeilen 7-16; Seite 5, Zeilen 10-29; Seite 6, Zeilen 1-8; Seite 7, Zeilen 11-27; Seite 8, Zeilen 1-11 * | 1,2 | |
| P,X | --- EP-A-0 159 803 (G.M.) * Zusammenfassung; Seite 7; Zeilen 10-32; Seite 8, Zeilen 1-22; Seite 9, Zeilen 14-24 * | 1,4,5 | RECHERCHIERTE SACHGEBIETE (Int. Cl.4) F 02 B F 02 M |
| X | --- US-A-3 303 832 (CHRYSLER) * Spalte 9, Zeilen 71-75; Spalte 10, Zeilen 1-41,53-60; Figuren 14,15 * | 1 | |
| A | | 4 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 06-08-1986 | JORIS J.C. |

Europäisches
Patentamt

**EUROPÄISCHER RECHERCHENBERICHT**

0200930

Nummer der Anmeldung

EP 86 10 4644

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| **EINSCHLÄGIGE DOKUMENTE** | | | |
| P,Y | EP-A-0 158 008  (PORSCHE) <br> * Zusammenfassung; Seite 1, die letzten 2 Abschnitte; Seite 3, letzter Abschnitt; Seite 4, erster Abschnitt * <br><br> --- | 3,6 | |
| E | EP-A-0 177 794  (AUDI) <br> * Zusammenfassung; Seite 1, erster Abschnitt; Seite 3, Zeilen 6-13; Seite 4, letzter Abschnitt; Seite 5, Abschnitte 1,2; Seite 6, zweiter und letzer Abschnitte; Seite 7, erster und zweiter Abschnitte * <br><br> ----- | 1,2 | |
| | | | **RECHERCHIERTE SACHGEBIETE (Int. Cl.4)** |

Der vorliegende Recherchenbericht wurde für alle Patentansprüche erstellt.

| Recherchenort <br> DEN HAAG | Abschlußdatum der Recherche <br> 06-08-1986 | Prüfer <br> JORIS J.C. |
|---|---|---|